# EUROPEAN PATENT APPLICATION

(11) **EP 0 604 989 A1**
(43) Date of publication of application: **06.07.1994**
(21) Application number: 93121034.8
(22) Date of filing: 28.12.1993
(51) Int. Cl.: G11B 5/708, G11B 5/842

(54) **Magnetic recording medium comprising soft load bearing particles and method of manufacture**

(30) Priority: 28.12.1992 US 997591
(71) Applicant: MINNESOTA MINING AND MANUFACTURING COMPANY, St. Paul, Minnesota 55133-3427 (US)
(72) Inventor: Lowery, David C., c/o Minnesota Mining and, St. Paul, Minnesota 55133-3427 (US)
(74) Representative: VOSSIUS & PARTNER

(57) **Abstract**

A magnetic recording medium comprises a substrate on which is a coating comprising at least one layer comprising hard particles and soft load bearing particles. The soft load bearing particles have a hardness less than that of the hard particles (preferably a Vickers hardness of less than 700 kg/mm² or a Moh's hardness less than 7.5), average diameters greater than 0.1 times the thickness of the layer in which they reside plus any layers that may lie between that layer and a contact recording head, and are present at a volume loading of less than 15% (measured against the total coating volume). The hard particles may be the magnetic pigment particles themselves, if they are present in the same layer as the soft load bearing particles. The medium is manufactured by a process that involves distinct dispersions of materials, only one of which dispersions comprises the soft load bearing particles. The dispersions are then combined to produce a material for coating. The finished media exhibit improved "runnability" performance, *i.e*., reduced static friction between the medium and a contact head, as well as reduced dynamic friction over extended (at least 48 hours) constant motion, increased durability, and decreased electromagnetic signal modulation. In the form of a diskette, the medium exhibits reduced starting torque.

## Description

This invention relates to magnetic recording media used in contact recording, and specifically such media which are designed to have reduced static and dynamic friction between the medium and the head, and thus reduced drive motor power requirements and increased durability.

Magnetic recording media are never completely "flat," as on a microscopic level they exhibit protrusions which, in the case of contact recording, effectively carry the load of the recording head. The tribology of the head/medium interface is always important, but especially so in the conventional floppy disk, or diskette, industry, due to the growth of portable battery-powered computers. Diskettes should exhibit as little static and dynamic friction as possible, to minimize the torque required to rotate the diskette, thus minimizing the load on the batteries of the computer. These are referred to as "runnability" issues.

One approach to the improved "runnability" issue involves adding soft load bearing particles, typically carbon black, to the dispersion comprising the magnetic recording material. U.S. Patent 4,539,257 (Ryoke *et al*.) discloses addition of carbon black particles having an average primary particle size in the range of 30 to 50 nanometer, which particles are capable of absorption of 120 milliliter or more of dibutyl phthalate per 100 gram of carbon black. U.S. Patent 4,661,402 (Kisbine *et al*.) discloses the addition of glasslike carbon powder having an average particle diameter of from 0.1 to 2.0 micrometer present in an amount of from 0.5 to 15 parts by weight per 100 parts by weight of the magnetic powder. Japanese Patent Application 64-281299 (publication number 3-142710, published June 18, 1991) discloses the addition of 2-20% (by weight of magnetic pigment) of carbon black having sizes in the range of 50-300 micrometers.

Very small particle carbon black (particle sizes generally less than 0.05 micrometer) is a known additive to magnetic recording dispersions for its ability to prevent static charge from interfering with normal use of the recording medium. Also, some approaches use multiple species of carbon black. U.S. Patent 4,654,258 (Kawamata *et al*.) discloses addition of two species of carbon black, the first having an average particle size of 25 nanometer or less and a BET specific surface area of from 150 to 250 m²/g, and the second having an average particle size of from 10 to 30 nanometer and a BET specific surface area of 700 m²/g or more. Each species of carbon black is typical of that known to be useful for static charge dissipation. U.S. Patent 4,786,551 (Ootami *et al*.) also discloses two species of carbon black, the first having an average single particle size of 10 to 50 nanometer and the second having an average single particle size of 200 to 1,000 nanometer.

Other approaches for "runnability" improvement do not require carbon black. Japanese Patent Application 2-54589 (publication number 3-254417, laid open November 13, 1991) by Ninomiya *et al*. discloses the use of silicone resin particles, the average size of which is less than the thickness of the magnetic layer, in amounts of 0.5% to 10% by weight of the silicone resin particle to the magnetic powder.

Similarly, European Patent Application 91109982.6 (publication number 0 462 570 A2, published December 27, 1991), discloses the addition of spherical particles having diameters in the range of from 0.5 to 1.5 times the thickness of the surface magnetic layer of a multilayer configuration; the spherical particles are present in the range of from 0.1 to 1 part per 100 parts by weight of magnetic powder included in the surface magnetic layer. The spherical particles may be silicon dioxide, although carbon black particles are also discussed as comparative examples.

In all of the approaches just discussed, the added particles are incorporated into the magnetic recording coating material through a single dispersion step, in which all particles to be dispersed are mixed with each other prior to a final dispersion step, such as bead milling; this is known as "co-dispersion."

One aspect of the invention is a magnetic recording medium for use in contact with a recording head, comprising a non-magnetic substrate on which a coating comprising at least one layer is present. Generally, at least one layer comprises a magnetic material comprising a first dispersion of hard particles, and a second dispersion of soft load bearing particles having a hardness less than that of the hard particles. Preferably, the load bearing particles may be characterized as having a Vickers hardness less than 700 kg/mm² (and more preferably less than 200 kg/mm²); or a Moh's hardness of less than 7.5 (and more preferably less than 5.0).

The soft load bearing particles have average diameters greater than 0.1 times the thickness of the layer in which they reside and any other layers between that layer and the recording head.

Preferably, the volume loading of the load bearing particles is less than 15% measured against the volume of the total coating layer containing the soft load bearing particles and any other layer(s) between such layer and the recording heads; and more preferably it is at least 1% of that volume.

If the medium comprises a single magnetic layer which in turn comprises the soft load bearing particles, then the hard particles are just the magnetic pigment material. If this is the only layer in the coating on the substrate, then in preferred embodiments the coating has a thickness less than 6.35 micrometers, and more preferably a thickness in the range of 0.2 to 2.0 micrometers.

Another aspect of the invention is a method of manufacturing a material for use in the manufacture of magnetic recording media. The method employs at least one completed dispersion for any hard particles, and a separate completed dispersion for the soft load bearing particles. The separate completed dispersions are combined, such that the particle size distribution of the combination of separate dispersions is essentially the same as the average, weighted by volume, of the particle size distributions of the separate dispersions. This material is suitable for coating onto a substrate or any other layer of the medium.

Once the desired number of layers is produced, the coated substrate may be finished into recording media (diskettes, tape, and the like) using standard techniques.

Figure 1 is a graph of the change in head-to-media friction, as a function of particle loading, for one embodiment of diskette media manufactured in accordance with the invention.

Figure 2 is a graph of the change in head-to-media friction, as a function of particle diameter to coating thickness ratio, for another embodiment of diskette media manufactured in accordance with the invention.

Figure 3 is a graph of the actual and predicted particle size distributions for magnetic material manufactured in accordance with the invention.

### Process Characterization

In this inventive media manufacturing process, distinct mixing and particle dispersion operations occur prior to preparation of the dispersion to be coated onto a substrate. In a first operation, wetting agents, binders, solvents, and soft load bearing particles are combined together using common equipment (*e.g*., a high speed mixer followed by a sand mill). In a second operation, solvents, wetting agents, binders, and magnetic pigment and/or hard particles (*e.g*., head cleaning agents such as aluminum oxide, chromium oxide, *etc*.) are combined together through a conventional process (such as high speed premixing followed by use of a sand mill). The invention comprises:
a) separately mixing and dispersing magnetic pigment particles and soft load bearing particles, *i.e*., more than one dispersion step occurs; and
b) mixing essentially only the soft load bearing particles in that particular mix, *i.e*., only particles that impart significant recording-related properties to the final recording media are in the mix. Thus, the mix may contain other materials such as solvents, wetting agents and binders, but not particles such as magnetic pigment particles, head cleaning agents and the like.

Accordingly, in some embodiments, there may actually be more than two particulate dispersions used, *e.g*., one for the magnetic particles, one for the soft load bearing particles, and one (or more) for head cleaning agents (or additional materials).

After the distinct particle dispersions are created separately, they are combined together (using additional solvent, lubricant, binder and/or hardener as required) to produce a complete mixture of magnetic and other materials that may be used in the manufacture of recording media (diskettes, tape and the like) through conventional coating and finishing operations.

### Raw Materials Characteriztion

In the most general case, the soft load bearing particles employed in the invention have a hardness less than that of the magnetic recording pigment particles; in most viable magnetic recording applications, this implies that the load bearing particles have either a Vickers hardness less than 700 kg/mm² (preferably less than 200 kg/mm²) or a Moh's hardness less than 7.5 (preferably less than 5.0).

As present in the magnetic recording medium, the soft load bearing particles have average diameters greater than 0.1 times the combined thicknesses of the layer containing the soft load bearing particles and all layer(s) between such layer and the magnetic recording head, if any such layers are present. For common recording media, this thickness is less than 6.35 micrometers, and is typically in the range of 0.2 to 2.0 micrometers.

A preferred soft load bearing particle material is carbon. In this preferred case, the soft load bearing particles are distinguished from the conductive carbon black used for static control purposes by a great difference in specific surface area. Carbon black suitable for soft load bearing particles has a BET specific surface area on the order of 10 m²/g, but a typical value for conductive carbon black is greater than 100 m²/g, and usually it is greater than approximately 700 m²/g.

### Manufacturing Example

Magnetic recording diskettes were manufactured as follows. First, a mixture of soft load bearing particles was formed by high speed mixing of the following materials:

| Material | Parts By Weight |
|---|---|
| methyl ethyl ketone | 29.6 |
| cyclohexanone | 7.4 |
| polyurethane binder | 0.7 |
| vinyl binder | 0.6 |
| wetting agent | 0.6 |
| load bearing carbon black | 61.1 |
| | TOTAL 100.0 |

This formulation was sandmilled to smoothness. The sandmilling completion criteria were: (1) change in "RODENSTOCK " smoothness number (S/N) of less than 1 unit on knife-coated (0.0381 mm knife gap) dispersion coatings from consecutive mill passes; (2) change in 45° gloss of less than 4 units on knife-coated (0.0381 knife gap) dispersion coatings from consecutive mill passes; and (3) average particle size (Mᵥ ), as determined by a Leeds and Northrup "MICROTRAC-II" apparatus, of less than 0.7 as measured on a diluted dispersion sample from consequtive mill passes.

The formulation comprised carbon particles having a distribution of diameters centered on 0.28 micrometer, with standard deviation of 0.20 micrometer, as determined by transmission electron microscopy.

Next, predispersed alumina was prepared as follows:

| Material | Parts By Weight |
|---|---|
| toluene | 40.00 |
| fatty acid wetting agent | 1.75 |
| alumina | 58.25 |
| | TOTAL 100.00 |

This formulation was first premixed under high speed mixing and then sandmilled. The sandmilling completion criteria were: (1) change in smoothness number (S/N) of less than 1.0 unit unit on knife-coated (0.0381 mm knife gap) dispersion coatings from consecutive mill passes; (2) change in 75° gloss of less than 1 unit on knife-coated (0.0381 knife gap) dispersion coatings from consequtive mill passes; and (3) average particle size (Mᵥ ) of less than 0.6-0.7 as measured on a diluted dispersion sample from consecutive mill passes.

Next, the following composition was combined under high speed mixing and sandmilled to smoothness:

| Material | Parts By Weight |
|---|---|
| methyl ethyl ketone | 26.95 |
| cyclohexanone | 23.32 |
| toluene | 0.72 |
| polyurethane binder | 0.52 |
| vinyl binder | 0.43 |
| wetting agent | 2.58 |
| magnetic oxide | 43.14 |
| conductive carbon black | 1.93 |
| fatty acid lubricant | 0.41 |
| | TOTAL 100.00 |

The conductive carbon black had a BET specific surface area of greater than 700 m²/g, while the soft load bearing carbon black had a BET specific surface area of appoximately 10 m²/g. The magnetic oxide had a linseed oil absorption of 37grams of oil per 100 grams of oxide and a BET specific surface area of 35 m²/g.

The sandmilling completion criteria were: (1) change in smoothness number (S/N) of less than 0.5 unit for consecutive mill passes on knife-coated (0.0381 mm knife gap) dispersion coatings; and (2) change in 45° gloss of less than 2 units for knife-coated (0.0381 knife gap) dispersion coatings from consecutive passes.

The three dispersions created above were then combined with each other, and other additives, such that the completed formula was:

| Material | Parts By Weight |
|---|---|
| methyl ethyl ketone | 56.80 |
| cyclohexanone | 14.20 |
| toluene | 1.37 |
| polyurethane binder | 0.28 |
| vinyl binder | 0.23 |
| wetting agent | 1.40 |
| magnetic oxide | 22.59 |
| alumina | 1.44 |
| conductive carbon black | 1.01 |
| soft load bearing carbon black | 0.33 |
| hardener | 0.90 |
| fatty acid lubricant | 0.25 |
| fatty acid ester lubricant | 0.57 |
| | TOTAL 100.00 |

Mixing was accomplished with a high speed mixer employing a circular "SHAR" mixing blade having a diameter equal to 0.35 times the mixing vessel diameter, and running at speed of 1500 rpm for ten minutes.

This composition was then coated on polyester substrate, dried, calendered, punched, burnished, and assembled into a completed microfloppy diskette, each according to standard processes.

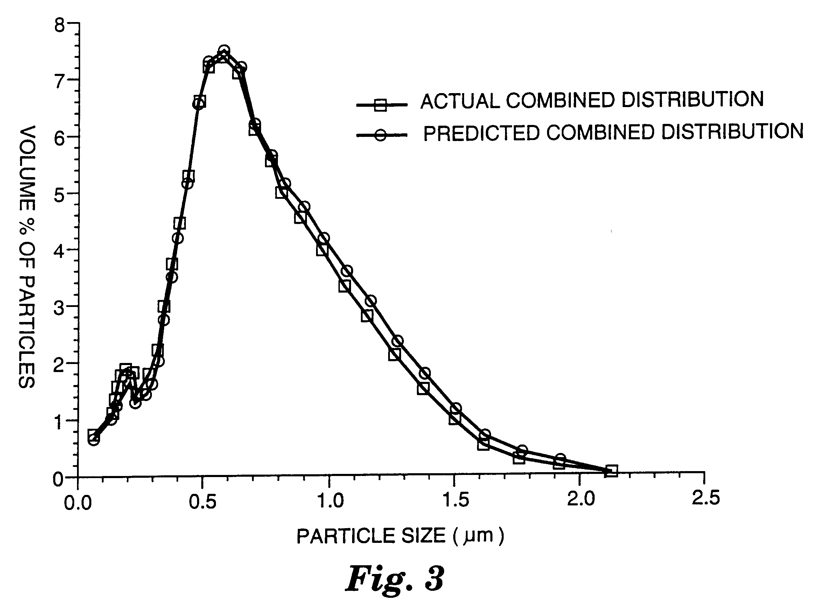

In another example, a set of separate completed dispersions was prepared generally as described above. The particle size distribution of each separate completed dispersion was measured. The separate completed dispersions were combined with other additives to produce the final composition above, and the particle size distribution of this combination was also measured. The results are shown in Figure 3. Figure 3 indicates that the particle size distribution of the combination is essentially the same as the average, weighted by volume, of the particle size distributions of the completed particle dispersions which comprise the combination. In particular, analysis of the data indicated that the difference between the average particle size for the actual combination of dispersions, and that predicted from the particle size distributions of the separate dispersions, was not statistically significant at a confidence level of 0.90.

### Media Performance Testing

A series of diskettes was manufactured as described above. Carbon black was chosen for the soft load bearing particles. The amount of carbon black present for load bearing purposes varied in the series of diskettes, to determine the effect of particle loading on frictional characteristics of the diskettes. Average friction reduction was determined by co-averaging percentage decrease values taken at diskette rotation speeds of 50, 300, 600 and 750 revolutions per minute. Friction was measured using a Sony recording head suitable for recording at "double density" (*i.e*., 360 kilobytes in DOS format per each side of a 86 mm (nominal 3.5 inch) diameter microfloppy diskette). Measurements were taken at a 2.8 cm radius without the cartridge in place.

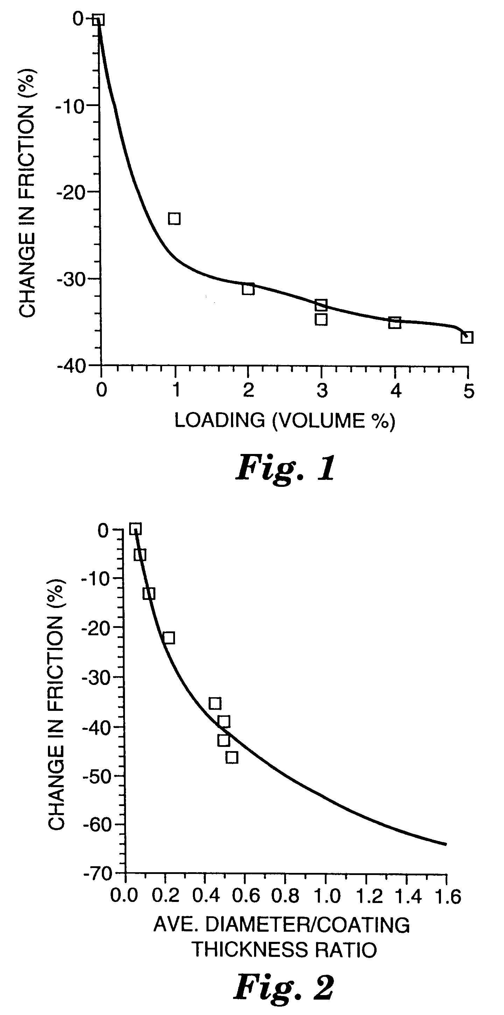

Figure 1 shows the results. They suggest a preferred minimum volume loading of 1%, and that additional amounts of carbon beyond 5% do not produce significantly improved friction reduction. At the 2% volume level, the friction was reduced by an average of 30%, the starting torque was reduced by 30%, and the increase in running torque during continuous running was reduced from approximately 30-50% to zero, *i.e*., perfect stability over time.

Another series of diskettes was manufactured as described above, using a constant carbon load bearing particle loading of 2% by volume and a variable magnetic coating thickness, expressed in terms of the ratio of the carbon particle diameter to the coating thickness. They were tested as described above, except that the coaveraging was at 50 rpm increments from 50 to 750 rpm.

Figure 2 shows the results. They clearly suggest that soft load bearing particle effectiveness increases with particle size relative to coating thickness, and that there is effectively no benefit at diameter/thickness ratios of approximately 0.1 and below. Thus, diameter/thickness ratios of 0.1 and greater are preferred for magnetic media manufactured in accordance with this invention.

### Process Identification in Media

Analytical differences were determined between recording media produced by the "baseline" co-dispersion method and the inventive method of incorporating soft load bearing particles. The inventive method employed predispersion of carbon in wetting agents and binders added prior to coating the media substrate. Samples of tape prepared using each method were etched in 50% (by volume) hydrochloric acid in an ultrasonicated water bath for two hours to remove the magnetic pigments. The samples were embedded in epoxy resin and cured overnight in a 60 C dry oven.

Ultrathin microtome cross sections were prepared. Transmission electron microscopy (TEM) photomicrographs of the approximately 90 nm thick cross sections were taken originally at a magnification of 5,000X using a JEOL model 100CX at an accelerating voltage of 100 KeV. The negatives were enlarged 3.2X in the dark room, for a total magnification of 16,000X.

The TEM photomicrographs from different fields of view showed significant differences between the two samples, specifically:
a) the sample prepared according to the invention had generally larger, and also generally more spheroidal, soft load bearing particles than the baseline sample; and
b) because soft load bearing particles prepared according to the invention were larger and generally more spheroidal, they produced generally larger projections from the coating, and those projections had a generally larger apparent radius of curvature.

From visual inspection of the TEM photomicrographs, the soft load bearing particles of primary interest (those greater than 0.4 times the coating thickness) were characterized by cross-sectional density, *i.e*., the number of particles per micron taken along the TEM cross-section. For media manufactured according to the non-inventive technique, the average cross-sectional density of such particles was 0.13/micron, the average aspect ratio of the particles was 2.8, and the media exhibited a friction value of 10.7 (measured in arbritrary units). By contrast, in media manufactured according to the technique of this invention, the average cross-sectional density was 0.29/micron, the average aspect ratio was 2.0, and the media exhibited a friction value of only 8.0 units. (The aspect ratios were determined using the maximum and minimum particle dimension as taken through the geometric center of the particle. The friction measurements employed average values determined as described above, at a radius of 1.2mm on a diskette revolving at 50, 100, 300, 600 and 750 revolutions per minute).

These results suggest that media manufactured in accordance with the invention have more than twice the cross-sectional density of soft load bearing particles in the size range of interest, and that the particles are generally more spheroidal (lower aspect ratio) than in the non-inventive media. These features correlate well with the lower friction measured for diskettes manufactured from the same materials.

### Applicability to Magnetic Recording Media

Reduced friction has been shown to reduce electromagnetic signal modulation, and therefore the invention should benefit all types of magnetic media regardless of format, *i.e*., tape, diskette, *etc*., and especially media in which the recording pigment particles are the known variations of iron oxide, iron metal particles, or barium ferrite. Examples include the common longitudinally recorded nominal 1MB and 2MB (unformatted) diskettes in the 90 mm microfloppy format; perpendicularly recorded nominal 4MB (unformatted) microfloppy diskettes; and very high density microfloppy diskettes, such as the optically servopositioned 21MB (formatted) Floptical® brand diskette. Such diskettes especially benefit from the advantages of the invention as they are commonly used with battery operated portable computers.

Magnetic media comprising more than one layer, often called "multilayer" media, are known. The invention is suitable for application to such media, *e.g*., the substrate may be directly coated with the magnetic layer containing the soft load bearing particles, and then one or more layer(s) may be added.

Alternatively. the magnetic layer comprising the soft load bearing particles may be coated directly on an added layer which lies between the magnetic layer and the substrate, as opposed to media in which the magnetic layer is coated directly onto the substrate itself. This design is typically used to increase the smoothness of the magnetic layer by coating it on a lower layer which is, or can be made to be, smoother than the substrate would be; increase durability; minimize the amount of magnetic recording pigment used in the magnetic layer; improve the static conductivity of the medium; and for other reasons. Typically such layers comprise hard particles as fillers and soft materials for the physical properties that such soft materials provide.

A third multilayer embodiment employs the soft load bearing particles not in the magnetic layer, but in the layer containing non-magnetic hard particles. (The magnetic particles would reside in a separate layer which lies between the layer comprising soft load bearing particles and the recording head). In this case, the relevant hardness comparison is between the soft load particles bearing particles and the hard particles that are added to the non-magentic layer for the various purposes indicated above.

In any multilayer embodiment, the thickness of the added material is taken into account in determination of the particle size/coating thickness ratio only if an additional layer is between the layer comprising the load bearing particles and the magnetic recording head; the thickness of a layer opposite the recording head from the layer containing the soft load bearing particles need not be considered. Similarly, with respect to determining the volume loading percentage of the soft load bearing particles, only the layer comprising the load bearing particles, and those layers between that layer and the magnetic recording head, are considered.

## Claims

1. A magnetic recording medium for use in contact with a recording head, comprising a non-magnetic substrate and a coating on the substrate which comprises at least one layer manufactured from a dispersion comprising hard particles and soft load bearing particles present at a volume loading of less than 15% measured against the total volume of the coating, the soft load bearing particles having a hardness less than that of the hard particles, and the coating having a thickness such that the soft load bearing particles have diameters greater than 0.1 times the thickness of the layer in which they reside plus the thickness of any layers between that layer and the recording head; in which the dispersion comprises a first mixture comprising the hard particles and a second mixture comprising the soft load bearing particles.

2. The magnetic recording medium of claim 1, in which the soft load bearing particles have a Vickers hardness less than 700 kg/mm².

3. The magnetic recording medium of claim 1, in which the soft load bearing particles having a Moh's hardness less than 7.5.

4. The medium of claim 1 or 2 or 3 in which the hard particles are magnetic pigment particles.

5. The medium of claim 4 in which there are at least two layers in the coating.

6. The magnetic recording medium of any one of claims 1 to in which the volume loading is at least 1%.

7. A method of manufacturing a material for use in manufacture of magnetic recording media, comprising the steps of:
(a) forming at least one completed dispersion of hard particles, which particles have a distribution of sizes;
(b) forming a completed dispersion of soft load bearing particles having a hardness less than that of the first particles, which soft load bearing particles have a distribution of sizes; and
(c) combining all completed dispersions of (a) and (b) into a combination, such that the particle size distribution of the combination is essentially the same as the average, weighted by volume, of the particle size distributions of the completed particle dispersions which comprise the combination.

8. The method of manufacturing a magnetic material of claim 7, in which the soft load bearing particles have a Vickers hardness less than 700 kg/mm².

9. The method of manufacturing a magnetic material for use in magnetic recording media of claim 7, in which the soft load bearing particles have a Moh's hardness less than 7.5.

10. The method of claims 7 or 8 or 9 in which the first particles are magnetic pigment particles.
